# EUROPEAN PATENT SPECIFICATION

(11) **EP 3 604 793 B1**
(45) Date of publication and mention of the grant of the patent: **05.05.2021**
(21) Application number: 18306073.0
(22) Date of filing: 03.08.2018
(51) Int. Cl.: F03B 3/12, F03B 11/00

(54) **INTER-BLADE PROFILES FOR HYDRAULIC TURBINES WITH REMOVABLE COVER PART**
ZWISCHENSCHAUFELPROFILE FÜR HYDRAULISCHE TURBINEN MIT ABNEHMBAREM ABDECKTEIL
PROFILS INTERAUBES POUR TURBINES HYDRAULIQUES AVEC PARTIE DE COUVERCLE AMOVIBLE

(43) Date of publication of application: 05.02.2020
(73) Proprietor: GE Renewable Technologies, 38100 Grenoble (FR)
(72) Inventor: BORNARD, Laurent, Brossard, Québec J4Z 0N5 (CA); SCOTT, David Allan, Brossard, Québec J4Z 0N5 (CA); BEAUBIEN, Carl-Anthony, Brossard, Québec J4Z 0N5 (CA); TAN, Seyla, 38041 GRENOBLE (FR); DI MARIA, Bernard, 38041 GRENOBLE (FR)
(74) Representative: Brevalex

(56) References cited:
- DE-A1- 10 122 524
- US-A- 1 942 995
- US-A- 2 494 623
- US-A- 3 305 215
- US-A- 5 879 130

## Description

### TECHNICAL FIELD AND PRIOR ART

The invention relates to the field of hydropower industry.

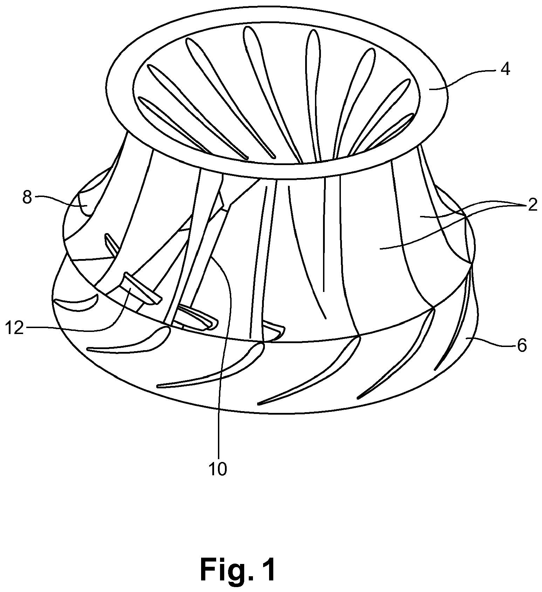

Figure 1 illustrates a known turbine runner, comprising runner blades 2 arranged between a crown 4 and a band 6. Each of these blades extends between a leading edge 8 and a trailing edge 10 from which water flows into a draft tube (not shown on figure 1). The present application applies not only to such turbines (Francis and others) and to turbine-pump runners possessing a crown and a band, but also to those with only a crown (propeller, or Kaplan, or diagonal flow and others).

Hollow inter-blade profiles 12 can be installed between blades in such a hydraulic turbine in order to provide aeration to the turbine flow. More precisely, as explained in US 2016/0327012, air is injected into the water flow in order to increase dissolved oxygen content in the water flowing through the turbine. More precisely, each such hollow inter-blade profile provides an internal channel and aeration passages located in the profile surface for air to flow through from air channels in the blade into the flowing water. Oxygen of the injected air is then transferred to the oxygen depleted flowing water, increasing dissolved oxygen levels as the air bubbles mix with the surrounding water.

Aeration passages, for example slots and/or holes, are located on the inter-blade profiles and can have complex geometries; access is not available or easy for machining such passages of an already installed inter-blade profile.

Furthermore, cleaning or maintaining or repairing such passages, and/or the channel inside the profile and located behind said passages, is difficult. Cleaning is in particular necessary when foreign materials have passed through the aeration passages and are stuck in the channel behind them, causing a reduction in the aeration potential of the turbine and reducing the dissolved oxygen levels in the tailrace below the power plant.

There is also the need to adapt the shape of these aeration passage(s) and/or of the inter-blade profile to new operating conditions of the runner. The geometry of a turbine runner is fixed and can be modified only by removing the whole turbine runner and by replacing it (which is very time consuming and very costly). Alternatively, machining the aeration passages without removing the whole turbine runner creates other difficulties because of the reduced space available for machining and the need for specialised tools.

US 3,305,215 discloses how to create a fluid cushion for hydraulic turbomachinery.

US 1,642,995 discloses a hydraulic turbine in which the blades comprise a passageway.

US 5,879,130 discloses an aeration through runner.

DE 10122524 discloses a turbine comprising segments between neighbouring blades.

US 2494623 discloses a hydraulic turbine in which a blade is provided with a deflector plate or strip 20.

### SUMMARY OF THE INVENTION

The invention concerns an inter-blade profile for a water turbine runner blade according to claim 1

The at least one aeration passage comprises for example at least one slot and/or at least one hole, and the removable securing means comprise for example at least one hole for at least one screw or bolt, for securing said removable cover onto said inter-blade profile and demounting said removable cover from said inter-blade profile when needed.

A detailed machining of the removable cover plate, in particular of its outside surface, can be performed since this cover plate is readily accessible, thus increasing accuracy and reducing the risks of non-compliant machining.

Furthermore, long-term maintenance of the aeration passages and of the aeration channel, because the cover plate is removable, can be facilitated. There is much better access to the aeration channel when the cover plate is removed, making it easier to clean and to remove any foreign materials that are too large to fit through the aeration passages.

The removable cover-plate is smaller than the whole inter-blade profile, so that weight is not an issue and the cover plate can be removed without disassembling the turbine, reducing stoppage time.

This permits a replacement of a damaged cover plate or replacement of a cover plate by a different cover plate having a different geometry, for example a different geometry of the aeration passage(s) and/or of the hydraulic shape of the profile itself, not requiring a major rehabilitation of the whole turbine.

Another advantage is that modifications of the geometry of the aeration passages and/or of the inter-blade profile can be made directly on the removable cover plate. Design improvements and modifications can be incorporated directly into the removable and replaceable cover plate without requiring a major stoppage to remove and replace the turbine runner.

Fabrication of inter-blade profiles and their positioning on the blades present challenges. The inter-blade profiles are fixed on the corresponding blades after the runner has been assembled: precise positioning of the inter-blade profile can be difficult to ensure and there is only limited work space between runner blades for final assembly and finishing. Yet, they must be carefully positioned to prevent flow separations and cavitation due to profiles that are hydraulically poorly oriented.

Another difficulty is that the geometry of a turbine runner is generally fixed and cannot be modified without removing the turbine runner and replacing it.

To solve these problems, an inter-blade profile according to the invention can be removable, comprising a profile and a plug forming a basis of the profile and intended for being inserted into a corresponding hole made in a blade. The inter-blade profile is thus pre-shaped on a plug that can be positioned in a corresponding hole on the runner blade. Said at least one inter-blade profile and said blade can be assembled, for example welded, together.

The plug, in cooperation with the hole, determines the position and orientation of the inter-blade profile in the correct orientation and improves manufacturability and ease of assembly. Any possibility of poor orientation is therefore avoided.

Use of a pre-machined inter-blade profile plug ensures a single orientation of said profile and eliminates the possibility of misalignment.

Since the inter-blade profile has been designed to be well oriented to the water flow, ensuring the profile can only be oriented in one direction reduces the possibility of flow separations or cavitation that may occur when the profile is installed in the wrong orientation.

In this embodiment of an inter-blade profile, comprising a profile and a plug, a method for fabricating a runner blade, comprising a blade and at least one inter-blade profile, can comprise:
- fabricating a blade comprising an air channel and at least one hole adapted to contain the plug of said at least one inter-blade profile;
- positioning the plug of said inter-blade profile in said hole and assembling said plug with said blade, for example by welding.

The combination of a plug and a hole improves assembly by fixing the position of the inter-blade profile prior to assembly. Features on the plug, such as pre-machined weld radii, reduces the time necessary to weld these features during final assembly and machining.

Such a method increases the manufacturability of turbine runners.

Such an inter-blade profile can comprise at least one zone, or fillet with at least one finite and possibly variable radius of curvature r between a lower part of the profile and an upper side of the plug, which reduces negative hydraulic phenomena, in particular horseshoe vortex behaviour.

The shape of the inter-blade profile, including one or more zones with at least one finite and possibly variable radius of curvature r for reducing horseshoe vortex behaviour and for reducing mechanical stresses, is thus pre-machined and reduces final assembly time and risks of non-compliance with dimensional requirements.

Since such features are pre-fabricated on the plug and the profile, there is no need for a manual control during their fabrication between two blades of a turbine runner, which eliminates manual operations in small spaces.

The invention also concerns a runner blade, comprising a blade with integrated air channel and at least one inter-blade profile comprising an internal channel and a removable cover plate according to the invention for covering at least part of said internal channel.

The invention also concerns a turbine runner, comprising runner blades with air channels, at least one of them according to the invention, said runner blades being arranged between a crown and a band or said runner blades extending from a crown or central hub.

The invention also concerns a method applied to an inter-blade profile comprising an internal channel and a removable cover plate according to the invention covering at least part of said internal channel or a runner blade comprising such an inter-blade profile or a turbine runner comprising at least one such runner blade, said method comprising removing said removable cover plate and:
- cleaning and/or maintaining and/or machining said internal channel and/or at least one aeration passage of said removable cover plate;
- and/or replacing said removable cover plate with another removable cover plate and/or machining at least one aeration passage of said removable cover plate and fixing it again against said inter-blade profile.

The advantages of a method according to the invention are in particular those already mentioned above.

When the inter-blade itself is removable, said method according to the invention can further comprise a step of removing said inter-blade profile from said blade, then removing said removable cover plate and performing one of the above steps.

### BRIEF DESCRIPTION OF THE FIGURES

- Figure 1 shows a hydroelectric turbine runner with inter-blade profiles,
- Figures 2A-2C are different views of an inter-blade profile on a plug, to which the invention can be applied, before insertion into a corresponding hole in a runner blade;
- Figure 2D shows different shapes of aeration passages that can be implemented in the present invention, other geometries and orientations can however be considered;
- Figure 3 illustrate a step of fabricating a blade including a hole in order to position therein a plug of an inter-blade profile;
- Figure 4 shows a single runner blade with an inter-blade profile comprising a plug and a profile;
- Figures 5 and 6 illustrate an inter-blade profile according to the invention, incorporating a removable plate with aeration slots;
- Figure 7 illustrates inter-blade profiles on blades on a propeller hub.

### DETAILED DISCLOSURE OF EMBODIMENTS

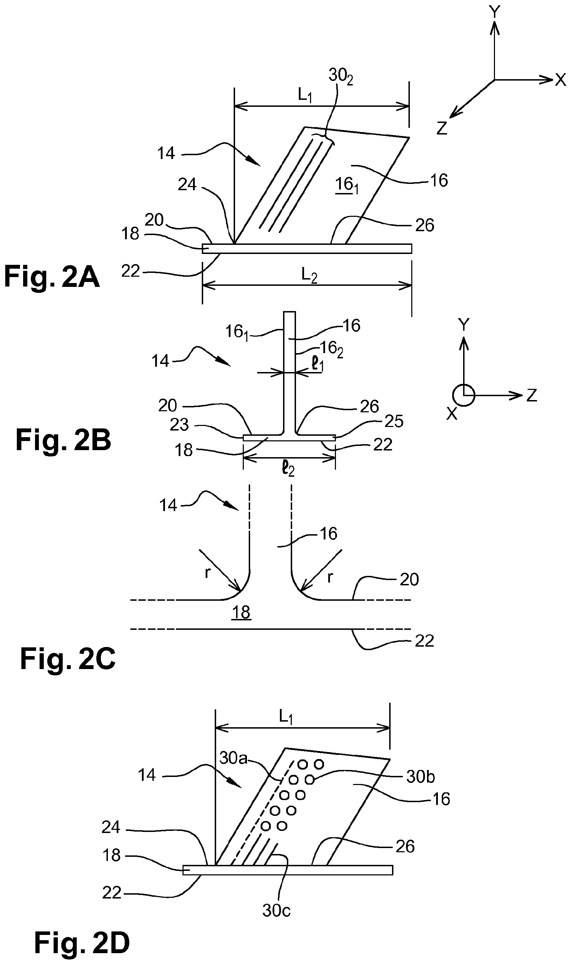

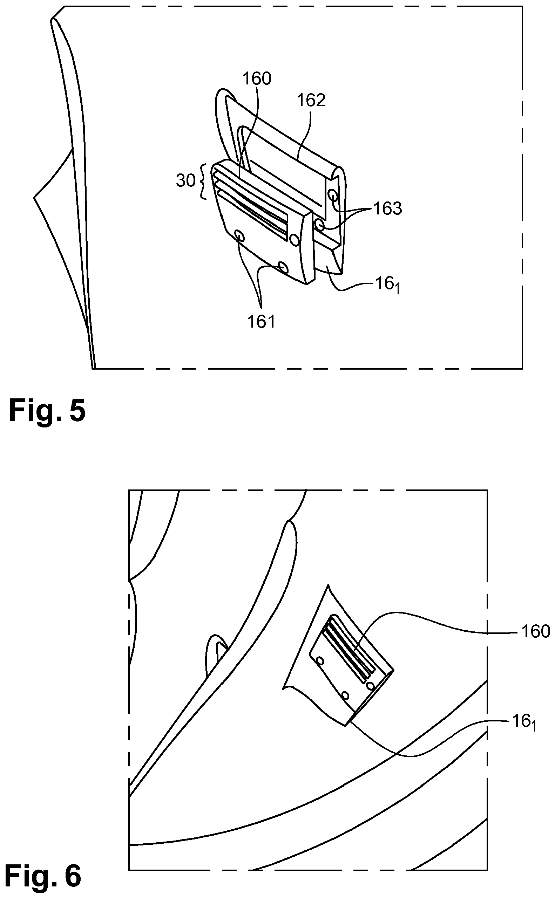

An inter-blade profile according to the invention will be explained in connection with figures 5 and 6. An example of inter-blade profile to which the invention can be applied is first given in connection with figures 2A - 4.

Figures 2A and 2B show lateral front views of an inter-blade profile 14 to which the invention can be applied. Figure 2C is an enlarged view of a part of the inter-blade profile 14. Figure 2D shows alternative shapes of aeration passages.

The inter-blade profile 14 comprises a profile 16, delimited by 2 lateral walls 16₁, 16₂, and a plug 18 (figures 2A, 2B), forming a basis of the profile 16.

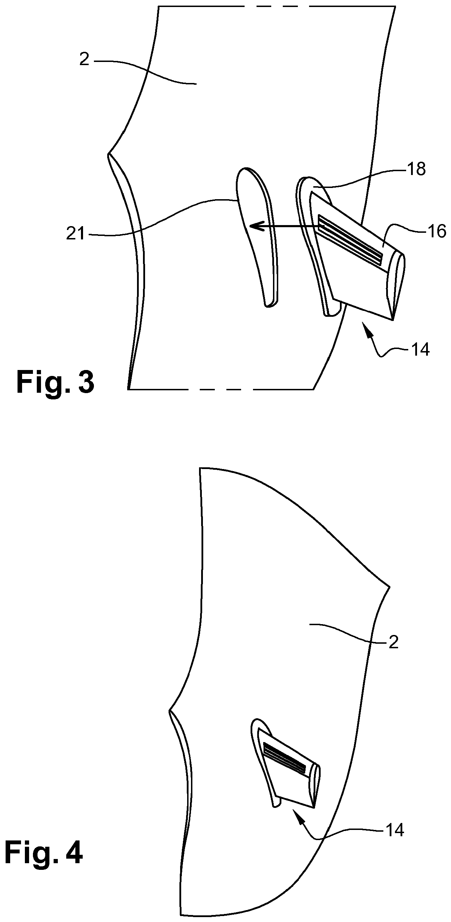

Said plug is intended to be inserted into a corresponding hole 21 made in the blade as illustrated on figure 3. The profile 16 and the plug 18 can be separately fabricated and then assembled or can be fabricated as one single piece.

The profile 16 has any shape adapted to the hydraulic requirements. In particular, it has at least one aeration passage, for example at least one slot(s) 30 (figure 2A) and/or hole(s) through at least one of its walls 16₁ and/or 16₂ for the circulation of air from the blade to the water. For certain ranges of operating conditions of the turbine one or more slots and/or holes can be located on both sides 16₁, 16₂ of the profile. It can be noted that the aeration passage(s) can have other possible geometries: one or more straight line(s) (as on figure 2A), or separated straight lines (ref 30a on figure 2D), or comprising one or more hole(s) (ref 30b on figure 2D), or straight parallel lines (ref 30c on figure 2D), all these geometries of figures 2A and 2D being possibly combined.

It shall be noted that the geometries previously mentioned or illustrated in figure 2D do not limit the scope of the present invention and the skill in the art can consider any other shape.

The plug substantially extends in a plane XZ (figure 2A) and has an upper side 20, turned to the profile itself and a lower side 22, which faces inside the blade after assembly of the inter-blade profile with the blade. It is limited by a contour or an outline having one lateral side 23, on one side of the profile 16, and another lateral side 25 (figure 2B). The contour can for example have a general oval shape.

The profile substantially extends in a plane XY (figure 2A; it therefore extends substantially perpendicularly to the extension plane of the plug). It has in this XY plane a length or an extension L₁ (measured along axis X between the two most distant points of said profile) where the length of the profile in any section is smaller than the length or extension L₂ of the plug. For example L₂ can be between 100 mm and 700 mm, depending on the needs; for example L₂ can be about 500 mm or close to 450 mm. Other values outside this range are possible. The plug substantially extends in a plane XZ (figure 2A) perpendicularly to plane XY.

The profile has, along a Z axis which extends perpendicularly to plane XY (figure 2B), a width I₁ (measured along axis Z between the two most distant points of said profile) where the width of the profile in any section is smaller than the width I₂ of the plug (measured along axis Z between the two most distant points of the lateral sides 23, 25 of the plug). For example I₂ can be between 30 mm and 300 mm, depending on the needs; for example I₂ can be about 50 mm or 100 mm. Other values outside this range are possible.

The thickness of the profile is taken along the z direction. Said thickness can vary along the height of the profile. For example the thickness can be longer at the base than at the top, or vice-versa. The hydraulic shape of the profile can thus be constant or can vary along the height of the profile in length, thickness or shape.

The profile and its plug can be pre-shaped to have all the attributes normally achieved after welding. In particular, fillets can be provided at the intersections 24, 26 of the profile and the upper side 20 of the plug. An example of such a fillet is shown on figure 2C: it forms a convex zone with a finite and possibly variable radius of curvature r between the lower part of the profile and the upper side 20 of the plug. These fillets reduce negative hydraulic phenomena at the intersections 24, 26 such as vortex flows and cavitation and help to reduce mechanical stresses at the intersection of the two surfaces.

These fillets are pre-fabricated before assembly of the inter-blade profile with the blade, thus avoiding a manual control of the weld fillet radius during assembly between 2 neighbouring blades of an already assembled turbine, the space between such 2 neighbouring blades being limited.

The plug is shown on figures 2A - 2D having flat upper and lower sides 20, 22; however, it can have any other shape, adapted to the surface of the blade where the inter-blade profile is to be located.

As can be understood from figure 3, a profile 16 and its plug 18 are fabricated separately from the blade 2. A hole 21 is made in the blade (to join the air channel in the blade to the hollow inter-blade profile, see figure 3) before the blade is mounted between a crown 4 and a band 6 as on figure 1 so that the plug can be positioned and fixed (for example, but limited to, welded, bolter, glued...) therein. Preferably, the profile and its plug are assembled with the blade after the blades are mounted between a crown 4 and a band 6 as on figure 1, which is much easier than the difficult and unprecise positioning of the profile according to the prior art which consists in positioning the profile (without plug) on the blade (without hole in the blade) and welding both together in situ with the best possible (but necessarily unprecise) positioning. Alternatively, the profile and its plug are assembled with the blade before the blades are mounted between the crown 4 and the band 6, which is also much easier than according to the prior art.

The profile is hollow and an internal channel of the profile communicates through said hole 21 with a channel inside the blade for the circulation of air through the blade, then through said internal channel of the profile and then through at least one aeration passage in the profile surface and finally into the flowing water.

The profile is fabricated with its plug. This can be done in a monobloc (as a single piece) or as a multi-piece assembly joining a base with a profile. The plug has a shape that fits into the hole 21 made in the blade (see figure 3) so that it can be positioned and welded therein. The weld seam around the plug (between the lateral sides 23, 25 of the plug and the hole) can be removed through grinding and polishing. More precisely, the hole is slightly larger and longer than the plug, so that the plug and the blade can be easily welded together after the plug is positioned inside the hole. The weld seam ensures water tightness and mechanical integrity of the assembled turbine runner.

Alternatively, the plug can be fixed to the blade by screwing or bolting, with help of screws or bolts and corresponding holes in the plug and in the blade, wherein one or more gasket can be used for water tightness. This makes the mounting and demounting of the plug easier.

Figure 4 shows a runner blade 2 together with an inter-blade profile 14 as explained above. On this figure, the runner blade has only one such inter-blade profile, however several such profiles can be assembled on a same blade on either the suction or pressure sides of the blade.

An embodiment of the invention, which can be applied to one or more of the above embodiments of an inter-blade profile, is now explained in connection with figures 5 and 6.

At least one part 160 of at least one lateral wall 16₁ of the inter-blade profile is removable. The other part of the inter-blade profile is fixed to the blade.

Said removable part 160, or cover plate, comprises one or more aeration passage(s) 30, for example at least one slot(s) and/or hole(s), for providing aeration to the water flow. Other shapes of aeration passage were disclosed above in connection with figures 2A and 2D and can be applied to the aeration passages of a removable cover plate according to the invention (for example: comprising one or more straight line(s) (as on figure 2A), or separated straight lines (ref 30a on figure 2D), or comprising one or more chevron(s), or straight parallel lines (ref 30c on figure 2D), all these geometries of figures 2A and 2D being possibly combined).

Other holes 161 (and corresponding holes 163 in the fixed part of the profile, aligned with holes 161) are for securing the removable part 160 to the inter-blade profile with screws. Other securing means like bolts or adhesive material can be implemented.

Figure 5 shows said removable cover plate 160 and the fixed part of said inter-blade profile before assembly and figure 6 shows these both parts assembled together.

Cover plate 160 is sufficiently small so that the cover plate can be easily removed without disassembling the turbine, reducing stoppage time.

The cover plate can have a substantially square or rectangular shape as illustrated on figure 5 but other shapes can be implemented.

Removing said cover plate 160 from said inter-blade profile:
- offers access to the aeration channel 162 (located behind the cover plate) thus allowing cleaning and/or maintenance of said aeration channel 162 and/or removal of any foreign materials that are too large to fit through the aeration passages and are stuck behind them;
- and/or offers access to the aeration passage(s) 30, thus allowing cleaning and/or maintenance of this/these aeration passage(s) and/or of the outside and/or the inner surface of the cover plate 160;
- and/or allows modifications of the aeration passage(s) geometry or of the geometry of the inter-blade profile itself (since the cover plate itself forms part of the inter-blade profile, its geometry is part of the geometry of the inter-blade profile).

The cover plate 160 can also be replaced with another removable part having for example different aeration slot(s) and/or hole(s).

Thus a damaged cover plate (for example a cover plate having damaged aeration passages) can be easily replaced or design improvements can be integrated into the turbine design without requiring a major stoppage to remove and replace the turbine runner. These modifications can be incorporated directly into the removable and replaceable cover plate 160.

The removable cover plate according to the invention can also be adapted to profiles fabricated together with a blade according to prior art techniques: it is therefore compatible:
- with a profile mounted on a plug, as explained above in connection with figures 2A-4;
- but also with a profile, for example made together with the blade (as illustrated on figure 1), with no pre-fabricated plug at the basis of the profile.

A runner can be fabricated, its blade(s) incorporating air channels and one or more inter-blade profiles comprising one or more removable cover plate according to the invention disclosed in connection with figures 5 and 6. Said removable cover plate(s) can be installed on the thus finished runner, reducing machining time.

A turbine runner according to the invention can comprise runner blades, at least one of them according to the invention, said runner blades being arranged between a crown and a band like on figure 1.

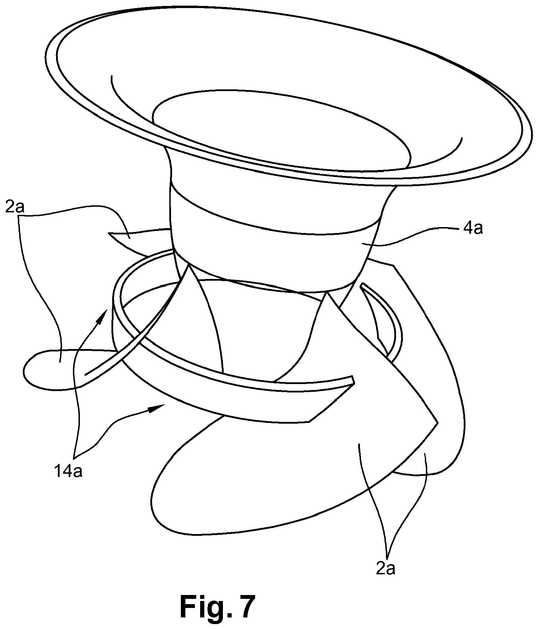

Alternatively, figure 7 shows runner blades 2a mounted on a propeller hub 4a, each blade comprising an inter-blade profile 14a, at least one inter-blade profile comprising one or more removable cover-plate according to the invention, said profile extending in this example from the suction side of a blade to the pressure side of the neighbouring blade. In other examples, the profile does not extended from one blade to the neighbouring one.

## Claims

1. An inter-blade profile (14, 14a) for a water turbine runner blade, said inter-blade profile (14, 14a) comprising an internal channel (162) and a removable cover plate (160) for covering at least part of said internal channel (162), said cover plate comprising at least one aeration passage (30) and securing means (161) for securing said removable cover plate onto said inter-blade profile (14, 14a).

2. An inter-blade profile according to claim 1, said at least one aeration passage (30) comprising at least one slot and/or at least one hole.

3. An inter-blade profile according to claim 1 or 2, said securing means (161) comprising: an adhesive, or at least one hole for at least one screw, or at least one hole for at least one bolt.

4. An inter-blade profile (14, 14a) according to any of claims 1 to 3, said inter-blade profile (14, 14a) being removable.

5. An inter-blade profile (14, 14a) according to any of claims 1 to 4, said inter-blade profile (14, 14a) comprising a profile (16) and a plug (18), forming a basis of the profile (16) and intended for being inserted into a corresponding hole (21) made in a blade.

6. An inter-blade profile (14, 14a) according to claim 5, comprising at least one zone (24, 26) with a finite radius of curvature r between the lower part of the profile (16) and an upper side (20) of the plug.

7. An inter-blade profile (14, 14a) according to claim 6, said radius of curvature r being variable along at least part of said lower part of the profile (16) and at least part of said upper side (20) of the plug.

8. A runner blade, comprising a blade (2, 2a) including an air channel and at least one inter-blade profile (14, 14a) according to any of claims 1 to 7.

9. A turbine runner, comprising runner blades, at least one of them according to claim 8, said runner blades being arranged between a crown and a band or said runner blades extending from a crown or central hub (4a).

10. A method for cleaning and/or maintaining an inter-blade profile (14, 14a) according to any of claims 1 to 7 or a runner blade according to claim 8 or a turbine runner according to claim 9, comprising removing said removable cover plate (160) and cleaning and/or maintaining and/or machining said internal channel (162) and/or at least one aeration passage (30) of said removable cover plate (160) and fixing again said removable cover plate against said inter-blade profile (14).

11. A method for modifying an inter-blade profile (14, 14a) according to any of claims 1 to 7 or a runner blade according to claim 8 or a turbine runner according to claim 9, comprising:
- removing said removable cover plate (160) and replacing it with another removable cover plate;
- or machining said at least one aeration passage (30) of said removable cover plate (160) and fixing again said removable cover plate against said inter-blade profile (14, 14a).

12. A method according to claim 10, comprising removing said inter-blade profile from said blade before removing said removable cover plate (160).

13. A method according to claim 11, comprising removing said inter-blade profile from said blade before removing said removable cover plate (160).

## Patentansprüche

1. Zwischenschaufelprofil (14, 14a) für eine Wasserturbinenlaufradschaufel, wobei das Zwischenschaufelprofil (14, 14a) einen inneren Kanal (162) und eine abnehmbare Abdeckplatte (160) zum Abdecken mindestens eines Teils des inneren Kanals (162) umfasst, wobei die Abdeckplatte mindestens einen Lüftungsdurchgang (30) und Befestigungsmittel (161) zum Befestigen der abnehmbaren Abdeckplatte an dem Zwischenschaufelprofil (14, 14a) umfasst.

2. Zwischenschaufelprofil nach Anspruch 1, wobei der mindestens eine Lüftungsdurchgang (30) mindestens einen Schlitz und/oder mindestens ein Loch umfasst.

3. Zwischenschaufelprofil nach Anspruch 1 oder 2, wobei die Befestigungsmittel (161) umfassen: ein Klebemittel, oder mindestens ein Loch für mindestens eine Schraube, oder mindestens ein Loch für mindestens einen Bolzen.

4. Zwischenschaufelprofil (14, 14a) nach einem der Ansprüche 1 bis 3, wobei das Zwischenschaufelprofil (14, 14a) abnehmbar ist.

5. Zwischenschaufelprofil (14, 14a) nach einem der Ansprüche 1 bis 4, wobei das Zwischenschaufelprofil (14, 14a) ein Profil (16) und einen Zapfen (18) umfasst, der eine Basis des Profils (16) bildet und dazu vorgesehen ist, in ein entsprechendes Loch (21), das in einer Schaufel gefertigt ist, eingeführt zu werden.

6. Zwischenschaufelprofil (14, 14a) nach Anspruch 5, umfassend mindestens einen Bereich (24, 26) mit einem endlichen Krümmungsradius r zwischen dem unteren Teil des Profils (16) und einer oberen Seite (20) des Zapfens.

7. Zwischenschaufelprofil (14, 14a) nach Anspruch 6, wobei der Krümmungsradius r entlang mindestens eines Teils des unteren Teils des Profils (16) und mindestens eines Teils der oberen Seite (20) des Zapfens variabel ist.

8. Laufradschaufel, umfassend eine Schaufel (2, 2a), die einen Luftkanal und mindestens ein Zwischenschaufelprofil (14, 14a) nach einem der Ansprüche 1 bis 7 beinhaltet.

9. Turbinenlaufrad, umfassend Laufradschaufeln, mindestens eine von diesen nach Anspruch 8, wobei die Laufradschaufeln zwischen einer Krone und einem Band eingerichtet sind oder die Laufradschaufeln sich von einer Krone oder zentralen Nabe (4a) erstecken.

10. Verfahren zum Reinigen und/oder Warten eines Zwischenschaufelprofils (14, 14a) nach einem der Ansprüche 1 bis 7 oder einer Laufradschaufel nach Anspruch 8 oder eines Turbinenlaufrads nach Anspruch 9, umfassend Abnehmen der abnehmbaren Abdeckplatte (160) und Reinigen und/oder Warten und/oder Bearbeiten des inneren Kanals (162) und/oder mindestens eines Lüftungsdurchgangs (30) der abnehmbaren Abdeckplatte (160) und Wiederfestmachen der abnehmbaren Abdeckplatte an dem Zwischenschaufelprofil (14).

11. Verfahren zum Modifizieren eines Zwischenschaufelprofils (14, 14a) nach einem der Ansprüche 1 bis 7 oder einer Laufradschaufel nach Anspruch 8 oder eines Turbinenlaufrads nach Anspruch 9, umfassend:
- Abnehmen der abnehmbaren Abdeckplatte (160) und Ersetzen dieser durch eine andere abnehmbare Abdeckplatte;
- oder Bearbeiten des mindestens einen Lüftungsdurchgangs (30) der abnehmbaren Abdeckplatte (160) und Wiederfestmachen der abnehmbaren Abdeckplatte an dem Zwischenschaufelprofil (14, 14a).

12. Verfahren nach Anspruch 10, umfassend Abnehmen des Zwischenschaufelprofils von der Schaufel vor Abnehmen der abnehmbaren Abdeckplatte (160).

13. Verfahren nach Anspruch 11, umfassend Abnehmen des Zwischenschaufelprofils von der Schaufel vor Abnehmen der abnehmbaren Abdeckplatte (160).

## Revendications

1. Profil inter-aube (14, 14a) pour une aube de roue mobile de turbine hydraulique, ledit profil inter-aube (14, 14a) comprenant un canal interne (162) et une plaque de couverture amovible (160) destinée à couvrir au moins une partie dudit canal interne (162), ladite plaque de couverture comprenant au moins un passage d'aération (30) et des moyens d'arrimage (161) pour arrimer ladite plaque de couverture amovible sur ledit profil inter-aube (14, 14a).

2. Profil inter-aube selon la revendication 1, ledit au moins un passage d'aération (30) comprenant au moins une fente et/ou au moins un trou.

3. Profil inter-aube selon la revendication 1 ou 2, lesdits moyens d'arrimage (161) comprenant : un adhésif, ou au moins un trou pour au moins une vis, ou au moins un trou pour au moins un boulon.

4. Profil inter-aube (14, 14a) selon l'une quelconque des revendications 1 à 3, ledit profil inter-aube (14, 14a) étant amovible.

5. Profil inter-aube (14, 14a) selon l'une quelconque des revendications 1 à 4, ledit profil inter-aube (14, 14a) comprenant un profil (16) et un bouchon (18), formant une base du profil (16) et destiné à être inséré dans un trou (21) correspondant réalisé dans une aube.

6. Profil inter-aube (14, 14a) selon la revendication 5, comprenant au moins une zone (24, 26) avec un rayon de courbure r fini entre la partie inférieure du profil (16) et un côté supérieur (20) du bouchon.

7. Profil inter-aube (14, 14a) selon la revendication 6, ledit rayon de courbure r étant variable le long d'au moins une partie de ladite partie inférieure du profil (16) et d'au moins une partie dudit côté supérieur (20) du bouchon.

8. Aube de roue mobile, comprenant une aube (2, 2a) incluant un canal d'air et au moins un profil inter-aube (14, 14a) selon l'une quelconque des revendications 1 à 7.

9. Roue mobile de turbine, comprenant des aubes de roue mobile, au moins l'une d'elles selon la revendication 8, lesdites aubes de roue mobile étant agencées entre une couronne et une bande ou lesdites aubes de roue mobile s'étendant depuis une couronne ou un moyeu central (4a).

10. Procédé de nettoyage et/ou d'entretien d'un profil inter-aube (14, 14a) selon l'une quelconque des revendications 1 à 7 ou d'une aube de roue mobile selon la revendication 8 ou d'une roue mobile de turbine selon la revendication 9, comprenant le retrait de ladite plaque de couverture amovible (160) et le nettoyage et/ou l'entretien et/ou l'usinage dudit canal interne (162) et/ou d'au moins un passage d'aération (30) de ladite plaque de couverture amovible (160) et la fixation à nouveau de ladite plaque de couverture amovible contre ledit profil inter-aube (14).

11. Procédé de modification d'un profil inter-aube (14, 14a) selon l'une quelconque des revendications 1 à 7 ou d'une aube de roue mobile selon la revendication 8 ou d'une roue mobile de turbine selon la revendication 9, comprenant :
- le retrait de ladite plaque de couverture amovible (160) et son remplacement par une autre plaque de couverture amovible ;
- ou l'usinage dudit au moins un passage d'aération (30) de ladite plaque de couverture amovible (160) et la fixation à nouveau de la plaque de couverture amovible contre ledit profil inter-aube (14, 14a).

12. Procédé selon la revendication 10, comprenant le retrait dudit profil inter-aube de ladite aube avant le retrait de ladite plaque de couverture amovible (160).

13. Procédé selon la revendication 11, comprenant le retrait dudit profil inter-aube de ladite aube avant le retrait de ladite plaque de couverture amovible (160).
